# EUROPEAN PATENT SPECIFICATION

(11) **EP 3 043 368 B1**
(45) Date of publication and mention of the grant of the patent: **18.10.2017**
(21) Application number: 15179780.0
(22) Date of filing: 05.08.2015
(51) Int. Cl.: H01H 39/00

(54) **BYPASS SWITCH FOR HVDC TRANSMISSION**
ÜBERBRÜCKUNGSSCHALTER FÜR HOCHSPANNUNGSGLEICHSTROMÜBERTRAGUNG
COMMUTATEUR DE DÉRIVATION POUR TRANSMISSION HVDC

(30) Priority: 12.01.2015 KR 20150004380
(43) Date of publication of application: 13.07.2016
(73) Proprietor: LSIS Co., Ltd., Anyang-si, Gyeonggi-do 431-848 (KR)
(72) Inventor: JUNG, Teag Sun, 431-080 Anyang-si, Gyeonggi-Do (KR)
(74) Representative: Lang, Johannes

(56) References cited:
- WO-A1-2009/092621
- WO-A1-2010/060790

## Description

### BACKGROUND

The present disclosure relates to a bypass switch, and particularly, to a high-speed short-circuit bypass switch for high voltage direct current transmission.

High voltage direct current (HVDC) transmission refers to an electric power transmission method in which alternating current (AC) power generated from a power plant is converted into direct current (DC) power and transmitted by a transmission substation, and the transmitted DC power is then converted into AC power again in a receiving substation to supply the power.

HVDC transmission systems are applied to submarine cable transmission, long distance bulk transmission, interconnection between AC systems, and the like. Also, the HVDC transmission systems enable interconnection between systems having different frequencies and synchronous interconnection.

The transmission substation converts AC power into DC power. That is, since the situation in which AC power is transmitted by using submarine cables and the like is very dangerous, the transmission substation converts the AC power into DC power and then transmits the DC power to a receiving substation.

Also, a high-speed short-circuit bypass switch of a high voltage direct current transmission system shorts a sub-module, when an abnormality such as a failure of the sub-module is detected in a system including a combination of sub-modules, and prevents the effect of the failure from being propagated to other adjacent sub-modules.

Since the high-speed short-circuit bypass switch should finish its operation in a short time, it should be designed as a structure which may be operated at an ultra high speed.

U.S. Patent No. 8,390,968 discloses a switch, which is operated by allowing current to flow through a coil installed in an operating direction and generates electromagnetic force to operate the switch. However, since the size of the coil becomes greater in such a structure, the volume of the switch is increased and may not be operated at a high speed.

Other bypass switches using solutions other than a coil for the operation of the switching members include the International Patent Applications WO 2009/092621 A1 and WO 2010/060790 A1. The two applications disclose switches with vacuum switch chamber, having a fixed and a movable connector in an opened position, with the moveable connector being displaced in a close / short position using driving device which can be pyrotechnic.

### SUMMARY

Embodiments provide a high-speed short-circuit bypass switch operating at a high speed.

Embodiments also provide a bypass switch manufactured to have a small volume.

In one embodiment, a bypass switch for high voltage direct current (HVDC) transmission includes: a housing; a fixed contactor disposed in the housing and electrically connected to a first portion (not shown) of an HVDC transmission circuit; a movable contactor movably disposed in the housing at a position spaced apart from the fixed contactor and electrically connected to a second portion of the HVDC transmission circuit; an insulation member coupled to the movable contactor; an explosive actuator exploded according to an electrical signal; and a piston mechanism which is moved by the force of gas generated due to explosion of the explosive actuator, applies force to move the insulation member, and allows the fixed contactor and movable contactor to be electrically connected to each other.

The piston mechanism Includes a piston member moved by the gas; and a magnetic member transferring force, which is applied by the piston member, to the insulation member between the insulation member and the piston member.

The explosive actuator may include an inflator injecting gas, and an inflator cover coupled to the inflator, wherein the inflator cover may include an inner space in which the gas injected from the inflator flows to the piston member and the piston member is movably disposed.

The bypass switch further includes a magnet for holding the magnetic member such that the movable contactor is spaced apart from the fixed contactor before the explosive actuator operates.

The magnetic member may be provided to have a cylindrical shape, and the magnet may be provided to have a shape of a hollow cylinder such that the magnetic member is disposed therein.

The bypass switch may further include a frame defining a space accommodating the housing, and the magnet may be disposed in the frame.

The bypass switch may further include a spring disposed around the magnet and applying force to the insulation member.

The bypass switch may include a first frame, a second frame, a third frame coupled to the fixed contactor and supported by the first and second frames, and a fourth frame coupled to the explosive actuator and supported by the first and second frames.

The magnet may be coupled to and supported by the fourth frame, and the spring may be disposed between the insulation member and the fourth frame.

The bypass switch may further include a first bussbar electrically connected to the fixed contactor, and a second bussbar electrically connected to the movable contactor.

The second bussbar may be disposed between the movable contactor and the insulation member and contact the movable contactor and the insulation member.

The insulation member may include a protrusion which penetrates a through hole formed in the second bussbar and is coupled to an insertion groove formed in the movable contactor.

The housing may be a vacuum housing and may further include a bellows disposed in the housing between the movable contactor and the housing.

The vacuum housing may be formed of an insulation material.

The fixed contactor and movable contactor may include an inner plate disposed inside the housing, an outer connection part which protrudes from the inner plate and is exposed to the outside of the housing.

The bypass switch may further include a frame defining a space accommodating the housing, and the explosive actuator may be disposed in the frame.

In another embodiment, a bypass switch for high voltage direct current (HVDC) transmission includes: a frame defining a space therein; a housing disposed in the space; a fixed contactor disposed in the housing; a first bussbar connected to the fixed contactor; a movable contactor movably disposed in the housing at a position spaced apart from the fixed contactor; a second bussbar connected to the movable contactor; an insulation member coupled to the movable contactor; an explosive actuator disposed in the frame and exploded according to an electrical signal; a piston mechanism which is moved by the force of gas generated due to the explosion of the explosive actuator, applies force to move the insulation member, and allows the movable contactor to make contact with the fixed contactor; and a spring disposed between the insulation member and the frame and applying force to the insulation member.

The frame may include a through hole into which a portion of the explosive actuator is inserted.

The piston mechanism may include a piston member moved by the gas; and a magnetic member transferring force, which is applied by the piston member, to the insulation member between the insulation member and the piston member.

The bypass switch may further include a magnet, disposed in the frame and holding the magnetic member such that the movable contactor is spaced apart from the fixed contactor before the explosive actuator operates.

The spring may be positioned at an outer circumferential surface of the magnet.

The details of one or more embodiments are set forth in the accompanying drawings and the description below. Other features will be apparent from the description and drawings, and from the claims.

### BRIEF DESCRIPTION OF THE DRAWINGS

Fig. 1 is a view illustrating the configuration of a high voltage direct current (HVDC) transmission system according to an embodiment of the present disclosure.
Fig. 2 is a view illustrating the configuration of a monopolar type high voltage direct current (HVDC) transmission system according to an embodiment of the present disclosure.
Fig. 3 is a view illustrating the configuration of a bipolar type high voltage direct current (HVDC) transmission system according to an embodiment of the present disclosure.
Fig. 4 is a view illustrating a wiring of a transformer and a three phase valve bridge according to an embodiment of the present disclosure.
Fig. 5 is a block diagram illustrating a modular multi-level converter according to an embodiment of the present disclosure.
Fig. 6 is a block diagram illustrating a modular multi-level converter according to another embodiment of the present disclosure.
Fig. 7 illustrates connections of the plurality of sub-modules according to an embodiment of the present disclosure.
Fig. 8 is an exemplary view illustrating a configuration of a sub-module according to an embodiment of the present disclosure.
Fig. 9 illustrates an equivalent model of a sub-module according to an embodiment of the present disclosure.
Fig. 10 is a perspective view of a bypass switch for HVDC transmission according to an embodiment.
Fig. 11 is a cross-sectional view of a bypass switch for HVDC transmission according to an embodiment when a fixed contactor and a movable contactor are spaced apart.
Fig. 12 is a cross-sectional view of a bypass switch for HVDC transmission according to an embodiment when the fixed contactor and the movable contactor are contacted.

### DETAILED DESCRIPTION OF THE EMBODIMENTS

In the description of the embodiments, it will be understood that, when a layer (or film), a region, a pattern, or a structure is referred to as being "on" or "under" another substrate, another layer (or film), another region, another pad, or another pattern, it can be "directly" or "indirectly" on the other substrate, layer (or film), region, pad, or pattern, or one or more intervening layers may also be present. Further, such a position of the layer has been described with reference to the drawings

The thickness and size of each layer shown in the drawings may be exaggerated, omitted or schematically drawn for the purpose of convenience or clarity. In addition, the size of elements does not utterly reflect an actual size.

Hereinafter, a bypass switch for high voltage direct current transmission according to embodiments will be described in more detail with reference to the accompanying drawings.

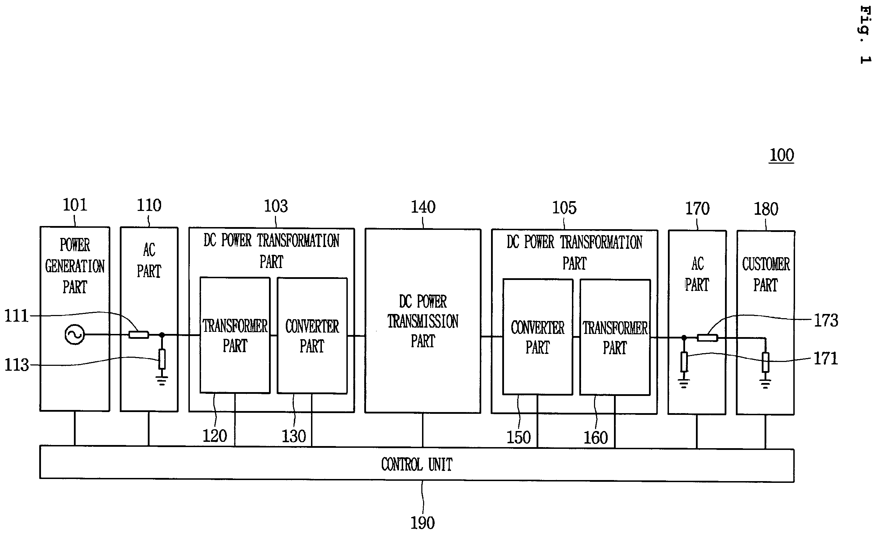

Fig.1 illustrates a high voltage direct current (HVDC) transmission system according to an embodiment.

As illustrated in Fig. 1, an HVDC system 100 according to an embodiment of the present disclosure includes a power generation part 101, a transmission side alternating current (AC) part 110, a transmission side DC power transformation part 103, a direct current (DC) power transmission part 140, a customer side power transformation part 105, a customer side AC part 170, a customer part 180, and a control part 190. The transmission side DC power transformation part 103 includes a transmission side transformer part 120, and a transmission side AC-DC converter part 130. The customer side power transformation part 105 includes a customer side DC-AC converter part 150, and a customer side transformer part 160.

The power generation part 101 generates three-phase AC power. The power generation part 101 may include a plurality of power generating plants.

The transmission side AC part 110 transmits the three-phase AC power generated by the power generation part 101 to a DC power transformation substation including the transmission side transformer part 120 and the transmission side AC-DC converter part 130.

The transmission side transformer part 120 isolates the transmission side AC part 110 from the transmission side AC-DC converter part 130 and the DC power transmission part 140.

The transmission side AC-DC converter part 130 converts the three-phase AC power, corresponding to the output of the transmission side transformer part 120, to DC power.

The DC power transmission part 140 transfers the transmission side DC power to the customer side.

The customer side DC-AC converter part 150 converts the DC power transferred by the DC power transmission part 140 into three-phase AC power.

The customer side transformer part 160 isolates the customer side AC part 170 from the customer side DC-AC converter part 150 and the DC power transmission part 140.

The customer side AC part 170 provides the customer part 180 with three-phase AC power corresponding to the output of the customer side transformer part 160.

The control part 190 controls at least one of the power generation part 101, the transmission side AC part 110, the transmission side DC power transformation part 103, the DC power transmission part 140, the customer side DC power transformation part 105, the customer side AC part 170, the customer part 180, the transmission side AC-DC converter part 130, and the customer side DC-AC converter part 150. Particularly, the control part 190 may control the turn-on and turn-off timings of a plurality of valves which are provided in the transmission side AC-DC converter part 130 and the customer side DC-AC converter part 150. Here, the valves may be thyristors or insulated gate bipolar transistors (IGBT).

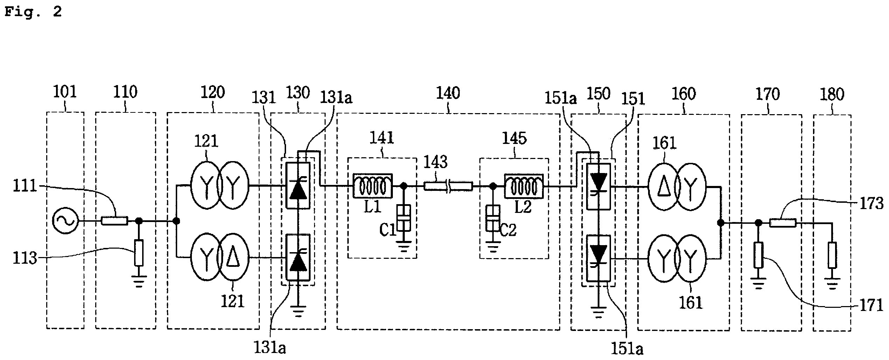

Fig. 2 illustrates a monopolar type HVDC transmission according to an embodiment.

Particularly, Fig. 2 illustrates a system which transmits DC power with a single pole. Hereinafter, the single pole is described assuming a positive pole, but is not necessarily limited thereto.

The transmission side AC part 110 includes an AC transmission line 111 and an AC filter 113.

The AC power transmission line 111 transfers the three-phase AC power generated by the generation part 101 to the transmission side DC power transformation part 103.

The AC filter 113 removes frequency components other than the frequency component used by the DC power transformation part 103 from the transferred three-phase AC power.

The transmission side transformer part 120 includes one or more transformers 121 for the positive pole. For the positive pole, the transmission side AC-DC converter part 130 includes an AC-positive pole DC converter 131, and the AC-positive pole DC converter 131 includes one or more three-phase valve bridges 131a respectively corresponding to the one or more transformers 121.

When one three-phase valve bridge 131a is used, the AC-positive pole DC converter 131 may generate positive pole DC power having six pulses by using the AC power. Here, a primary coil and a secondary coil of one of the transformers 121 may have a Y-Y connection or a Y-delta (Δ) connection.

When two three-phase valve bridges 131a are used, the AC-positive pole DC converter 131 may generate positive pole DC power having 12 pulses by using the AC power. Here, a primary coil and a secondary coil of one of the two transformers 121 may have a Y-Y connection, and a primary coil and a secondary coil of the other of the two transformers 121 may have a Y-Δ connection.

When three three-phase valve bridges 131a are used, the AC-positive pole DC converter 131 may generate positive pole DC power having 18 pulses by using the AC power. The greater the number of pulses of the positive pole DC power, the lower the price of the filter may become.

The DC power transmission part 140 includes a transmission side positive pole DC filter 141, a positive pole DC power transmission line 143, and a customer side positive pole DC filter 145.

The transmission side positive pole DC filter 141 includes an inductor L1 and a capacitor C1 and performs DC filtering on the positive pole DC power output by the AC-positive pole DC converter 131.

The positive pole DC power transmission line 143 has a single DC line for the transmission of the positive pole DC power, and the ground may be used as a current feedback path. One or more switches may be disposed on the DC line.

The customer side positive pole DC filter 145 includes an inductor L2 and a capacitor C2 and performs DC filtering on the positive pole DC power transferred through the positive pole DC power transmission line 143.

The customer side DC-AC converter part 150 includes a positive pole DC-AC converter 151 and the positive pole DC-AC converter 151 includes one or more three-phase valve bridges 151a.

The customer side transformer part 160 includes, for the positive pole, one or more transformers 161 respectively corresponding to one or more three-phase valve bridges 151a.

When one three-phase valve bridge 151a is used, the positive pole DC-AC converter 151 may generate AC power having six pulses by using the positive pole DC power. Here, a primary coil and a secondary coil of one of the transformers 161 may have a Y-Y connection or a Y-delta (Δ) connection.

When two three-phase valve bridges 151a are used, the positive pole DC-AC converter 151 may generate AC power having 12 pulses by using the positive pole DC power. Here, a primary coil and a secondary coil of one of the two transformers 161 may have a Y-Y connection, and a primary coil and a secondary coil of the other of the two transformers 161 may have a Y-Δ connection.

When three three-phase valve bridges 151a are used, the positive pole DC-AC converter 151 may generate AC power having 18 pulses by using the positive pole DC power. The more the number of pulses of the AC power, the lower the price of the filter may become.

The customer side AC part 170 includes an AC filter 171 and an AC power transmission line 173.

The AC filter 171 removes frequency components other than the frequency component (for example, 60Hz) used by the customer part 180 from the AC power generated by the customer side power transformation part 105.

The AC power transmission line 173 transfers the filtered AC power to the customer part 180.

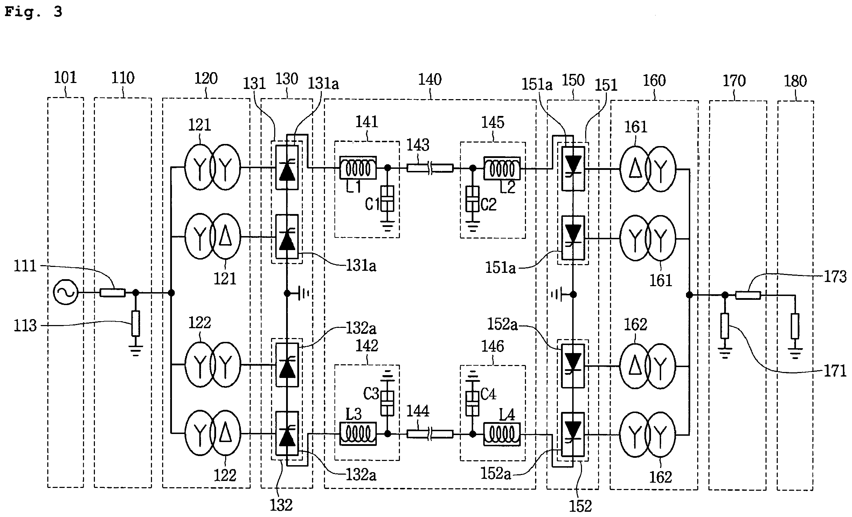

Fig. 3 illustrates a bipolar type HVDC transmission system according to an embodiment.

Particularly, Fig. 3 illustrates a system which transmits DC power with two poles. In the description below, the two poles are assumed to be a positive pole and a negative pole, but are not necessarily limited thereto.

The transmission side AC part 110 includes an AC transmission line 111 and an AC filter 113.

The AC power transmission line 111 transfers the three-phase AC power generated by the generation part 101 to the transmission side power transformation part 103.

The AC filter 113 removes frequency components other than the frequency component used by the power transformation part 103 from the transferred three-phase AC power.

The transmission side transformer part 120 includes one or more transformers 121 for the positive pole, and one or more transformers 122 for the negative pole. The transmission side AC-DC converter part 130 includes an AC-positive pole DC converter 131 which generates positive pole DC power and an AC-negative pole DC converter 132 which generates negative pole DC power. The AC-positive pole DC converter 131 includes one or more three-phase valve bridges 131a respectively corresponding to the one or more transformers 121 for the positive pole. The AC-negative pole DC converter 132 includes one or more three-phase valve bridges 132a respectively corresponding to the one or more transformers 122 for the negative pole.

When one three-phase valve bridge 131a is used for the positive pole, the AC-positive pole DC converter 131 may generate positive pole DC power having six pulses by using the AC power. Here, a primary coil and a secondary coil of one of the transformers 121 may have a Y-Y connection or a Y-delta (Δ) connection.

When two three-phase valve bridges 131a are used for the positive pole, the AC-positive pole DC converter 131 may generate positive pole DC power having 12 pulses by using the AC power. Here, a primary coil and a secondary coil of one of the two transformers 121 may have a Y-Y connection, and a primary coil and a secondary coil of the other of the two transformers 121 may have a Y-Δ connection.

When three three-phase valve bridges 131a are used for the positive pole, the AC-positive pole DC converter 131 may generate positive pole DC power having 18 pulses by using the AC power. The more the number of pulses of the positive pole DC power, the lower the price of the filter may become.

When one three-phase valve bridge 132a is used for the negative pole, the AC-negative pole DC converter 132 may generate negative pole DC power having six pulses. Here, a primary coil and a secondary coil of one of the transformers 122 may have a Y-Y connection or a Y-delta (Δ) connection.

When two three-phase valve bridges 132a are used for the negative pole, the AC-negative pole DC converter 132 may generate negative pole DC power having 12 pulses. Here, a primary coil and a secondary coil of one of the two transformers 122 may have a Y-Y connection, and a primary coil and a secondary coil of the other of the two transformers 122 may have a Y-Δ connection.

When three three-phase valve bridges 132a are used for the negative pole, the AC-negative pole DC converter 132 may generate negative pole DC power having 18 pulses. The more the number of pulses of the negative pole DC power, the lower the price of the filter may become.

The DC power transmission part 140 includes a transmission side positive pole DC filter 141, a transmission side negative pole DC filter 142, a positive pole DC power transmission line 143, a negative pole DC power transmission line 144, a customer side positive pole DC filter 145, and a customer side negative pole DC filter 146.

The transmission side positive pole DC filter 141 includes an inductor L1 and a capacitor C1 and performs DC filtering on the positive pole DC power output by the AC-positive pole DC converter 131.

The transmission side negative pole DC filter 142 includes an inductor L3 and a capacitor C3 and performs DC filtering on the negative pole DC power output by the AC-negative pole DC converter 132.

The positive pole DC power transmission line 143 has a single DC line for transmission of the positive pole DC power, and the earth may be used as a current feedback path. One or more switches may be disposed on the DC line.

The negative pole DC power transmission line 144 has a single DC line for the transmission of the negative pole DC power, and the earth may be used as a current feedback path. One or more switches may be disposed on the DC line.

The customer side positive pole DC filter 145 includes an inductor L2 and a capacitor C2 and performs DC filtering on the positive pole DC power transferred through the positive pole DC power transmission line 143.

The customer side negative pole DC filter 146 includes an inductor L4 and a capacitor C4 and performs DC filtering of the negative pole DC power transferred through the negative pole DC power transmission line 144.

The customer side DC-AC converter part 150 includes a positive pole DC-AC converter 151 and a negative pole DC-AC converter 152. The positive pole DC-AC converter 151 includes one or more three-phase valve bridges 151a, and the negative pole DC-AC converter 152 includes one or more three-phase valve bridges 152a.

The customer side transformer part 160 includes, for the positive pole, one or more transformers 161 respectively corresponding to one or more three phase valve bridges 151a, and for the negative pole, one or more transformers 162 respectively corresponding to one or more three-phase valve bridges 152a.

When one three-phase valve bridge 151a is used for the positive pole, the positive pole DC-AC converter 151 may generate AC power having six pulses by using the positive pole DC power. Here, a primary coil and a secondary coil of one of the transformers 161 may have a Y-Y connection or a Y-delta (Δ) connection.

When two three-phase valve bridges 151a are used for the positive pole, the positive pole DC-AC converter 151 may generate AC power having 12 pulses by using the positive pole DC power. Here, a primary coil and a secondary coil of one of the two transformers 161 may have a Y-Y connection, and a primary coil and a secondary coil of the other of the two transformers 161 may have a Y-Δ connection.

When three three-phase valve bridges 151a are used for the positive pole, the positive pole DC-AC converter 151 may generate AC power having 18 pulses by using the positive pole DC power. The more the number of pulses of the AC power, the lower the price of the filter may become.

When one three-phase valve bridge 152a is used for the negative pole, the negative pole DC-AC converter 152 may generate AC power having six pulses by using the negative pole DC power. Here, a primary coil and a secondary coil of one of the transformers 162 may have a Y-Y connection or a Y-delta (Δ) connection.

When two three-phase valve bridges 152a are used for the negative pole, the negative pole DC-AC converter 152 may generate AC power having 12 pulses by using the negative pole DC power. Here, a primary coil and a secondary coil of one of the two transformers 162 may have a Y-Y connection, and a primary coil and a secondary coil of the other of the two transformers 162 may have a Y-Δ connection.

When three three-phase valve bridges 152a are used for the negative pole, the negative pole DC-AC converter 152 may generate AC power having 18 pulses by using the negative pole DC power. The more the number of pulses of the AC power, the lower the price of the filter may become.

The customer side AC part 170 includes an AC filter 171 and an AC power transmission line 173.

The AC filter 171 removes frequency components other than the frequency component (for example, 60Hz) used by the customer part 180 from the AC power generated by the customer side DC power transformation part 105.

The AC power transmission line 173 transfers the filtered AC power to the customer part 180.

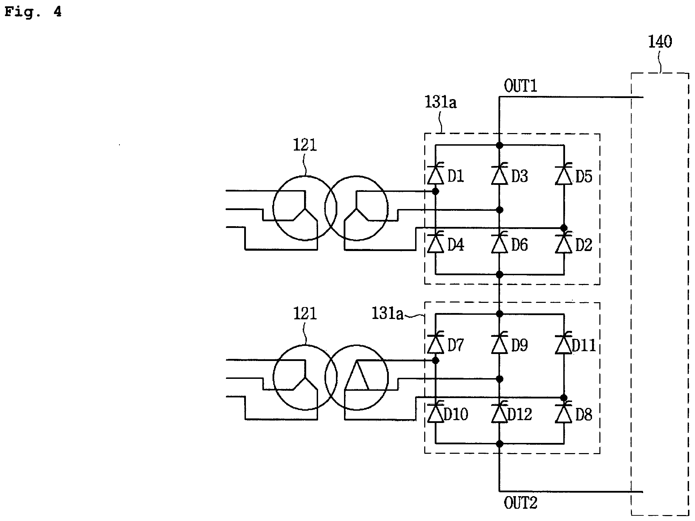

Fig. 4 illustrates a connection between a transformer and a three-phase valve bridge according to an embodiment.

Particularly, Fig. 4 illustrates the connection between the two transformers 121 for the positive pole and the two three-phase valve bridges 131a for the positive pole. Since the connection between the two transformers 122 for the negative pole and the two three-phase valve bridges 132a for the negative pole, the connection between the two transformers 161 for the positive pole and the two three-phase valve bridges 151a for the positive pole, the connection between the two transformers 162 for the negative pole and the two three-phase valve bridges 152a for the negative pole, the connection between the one transformer 121 for the positive pole and the one three-phase valve bridge 131a for the positive pole, the connection between the one transformer 161 for the positive pole and the one three-phase valve bridge 151a for the positive pole, etc., could be easily derived from the embodiment of Fig. 4, drawings and descriptions thereof will not be provided herein.

In Fig. 4, the transformer 121 having the Y-Y connection is referred to as an upper transformer, the transformer 121 having the Y-Δ connection is referred to as a lower transformer, the three-phase valve bridge 131a connected to the upper transformer is referred to as an upper three phase valve bridge, and the three-phase valve bridges 131a connected to the lower transformer is referred to as a lower three-phase valve bridge.

The upper three-phase valve bridge and the lower three-phase valve bridge have two output terminals outputting DC power, i.e., a first output terminal OUT1 and a second output terminal OUT2.

The upper three-phase valve bridge includes six valves D1 to D6, and the lower three-phase valve bridge includes six valves D7 to D12.

The valve D1 has a cathode connected to the first output terminal OUT1 and an anode connected to a first terminal of the secondary coil of the upper transformer.

The valve D2 has a cathode connected to the anode of the valve D5 and an anode connected to the anode of the valve D6.

The valve D3 has a cathode connected to the first output terminal OUT1 and an anode connected to a second terminal of the secondary coil of the upper transformer.

The valve D4 has a cathode connected to the anode of the valve D1 and an anode connected to the anode of the valve D6.

The valve D5 has a cathode connected to the first output terminal OUT1 and an anode connected to a third terminal of the secondary coil of the upper transformer.

The valve D6 has a cathode connected to the anode of the valve D3.

The valve D7 has a cathode connected to the anode of the valve D6 and an anode connected to a first terminal of the secondary coil of the lower transformer.

The valve D8 has a cathode connected to the anode of the valve D11 and an anode connected to a second output terminal OUT2.

The valve D9 has a cathode connected to the anode of the valve D6 and an anode connected to a second terminal of the secondary coil of the lower transformer.

The valve D10 has a cathode connected to the anode of the valve D7 and an anode connected to the second output terminal OUT2.

The valve D11 has a cathode connected to the anode of the valve D6 and an anode connected to a third terminal of the secondary coil of the lower transformer.

The valve D12 has a cathode connected to the anode of the valve D9 and an anode connected to the second output terminal OUT2.

Also, the customer side DC-AC converter part 150 may be configured as a modular multi-level converter 200.

The modular multi-level converter 200 may convert DC power into AC power by using a plurality of sub-modules 210.

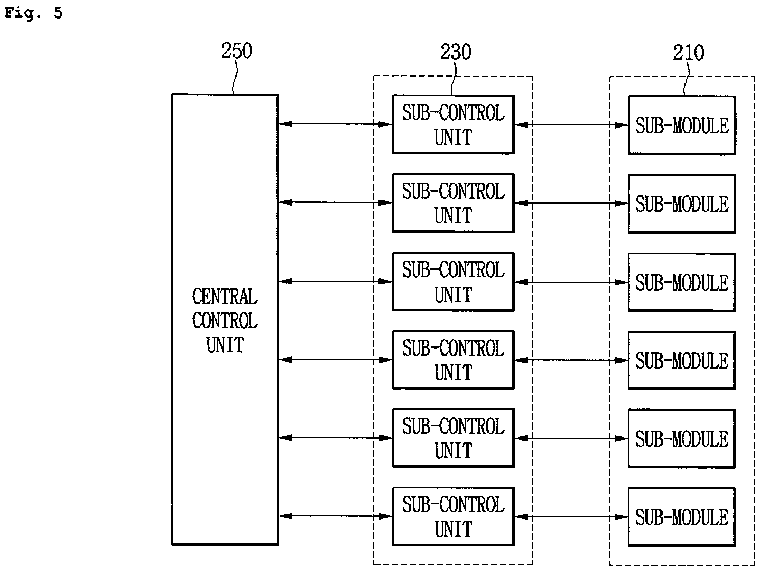

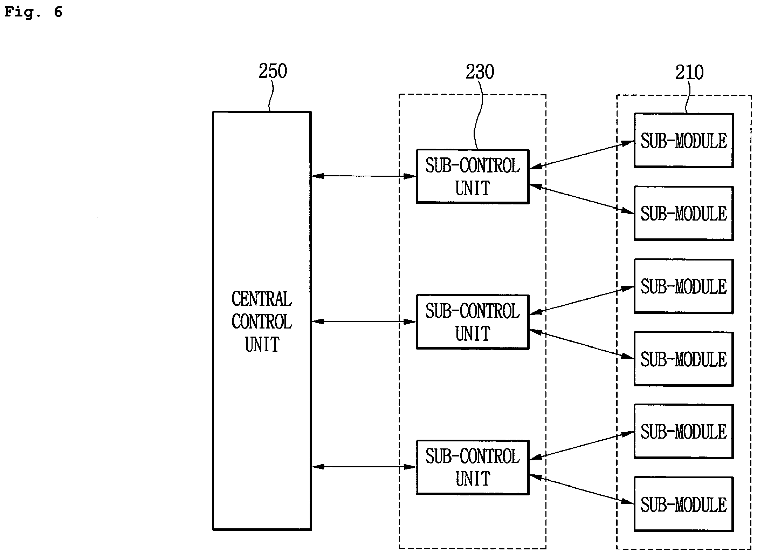

Referring to Figs. 5 and 6, the configuration of the modular multi-level converter 200 will be described.

Figs. 5 and 6 are block diagrams illustrating a modular multi-level converter 200.

The modular multi-level converter 200 includes a central control unit 250, a plurality of sub-control units 230 and a plurality of sub-modules 210.

The central control unit 250 controls the plurality of sub-control units 230, and the sub-control units 230 may respectively control the sub-modules 210 connected thereto.

Here, as illustrated in Fig. 5, one sub-control unit 230 is connected to one sub-module 210 and accordingly, may control the switching operation of the one sub-module 210 connected thereto based on a control signal transferred through the central control unit 250.

Also, alternatively, as shown in Fig. 6, one sub-control unit 230 is connected to a plurality of sub-modules 210 and accordingly, may confirm each of the control signals for the plurality of sub-modules 210 connected thereto by using a plurality of control signals transferred through the central control unit 250. Each of the plurality of sub-modules 210 may be controlled based on the confirmed control signals.

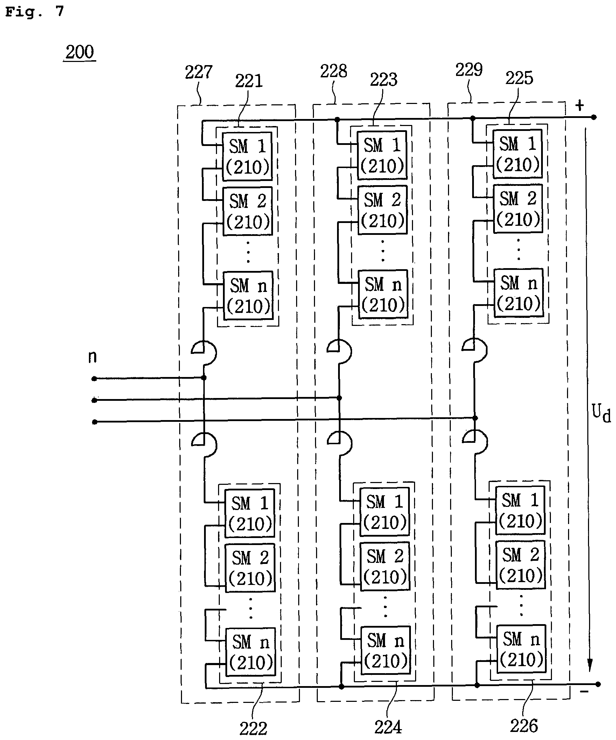

Referring to Fig. 7, the connections of the plurality of sub-modules 210 included in the modular multi-level converter 200 will be described.

Fig. 7 illustrates the connections of the plurality of sub-modules 210 included in the modular multi-level converter 200.

Referring to Fig. 7, the plurality of sub-modules 210 may be serially connected, and the plurality of sub-modules 210 connected to a positive pole or negative pole of one phase may constitute one arm.

The three-phase modular multi-level converter 200 may normally include six arms, and include a positive pole and a negative pole for each of the three phases A, B, and C to form the six arms.

Accordingly, the three-phase modular multi-level converter 200 may include: a first arm 221 including a plurality of sub-modules 210 for a positive pole of phase A; a second arm 222 including a plurality of sub-modules 210 for a negative pole of phase A; a third arm 223 including a plurality of sub-modules 210 for a positive pole of phase B; a fourth arm 224 including a plurality of sub-modules 210 for a negative pole of phase B; a fifth arm 225 including a plurality of sub-modules 210 for a positive pole of phase C; and a sixth arm 226 including a plurality of sub-modules 210 for a negative pole of phase C.

Also, the plurality of sub-modules 210 for one phase may constitute a leg.

Accordingly, the three-phase modular multi-level converter 200 may include: a phase A leg 227 including a plurality of sub-modules 210 for phase A; a phase B leg 228 including a plurality of sub-modules 210 for phase B; and a phase C leg 229 including a plurality of sub-modules 210 for phase C.

Therefore, the first to sixth arms 221 to 226 are respectively included in the phase A leg 227, the phase B leg 228, and phase C leg 229.

Specifically, in the phase A leg 227, the first arm 221, which is the positive pole arm of phase A, and the second arm 222, which is the negative pole arm of phase A, are included; and in the phase B leg 228, the third arm 223, which is the positive pole arm of phase B, and the fourth arm 224, which is the negative pole arm of phase B, are included. Also, in the phase C leg 229, the fifth arm 225, which is the positive pole arm of phase C, and the sixth arm 226, which is the negative pole arm of phase C, are included.

Also, the plurality of sub-modules 210 may constitute a positive pole arm 227 and a negative pole arm 228 according to polarity.

Specifically, referring to Fig. 7, the plurality of sub-modules 210 included in the modular multi-level converter 200 may be classified, with respect to a neutral line n, into a plurality of sub-modules 210 corresponding to the positive pole and a plurality of sub-modules 210 corresponding to the negative pole.

Thus, the modular multi-level converter 200 may include a positive arm 227 including the plurality of sub-modules 210 corresponding to the positive pole, and a negative arm 228 including the plurality of sub-modules 210 corresponding to the negative pole.

Accordingly, the positive pole arm 227 may include the first arm 221, the third arm 223, and the fifth arm 225; and the negative pole arm 228 may include the second arm 222, the fourth arm 224, and the sixth arm 226.

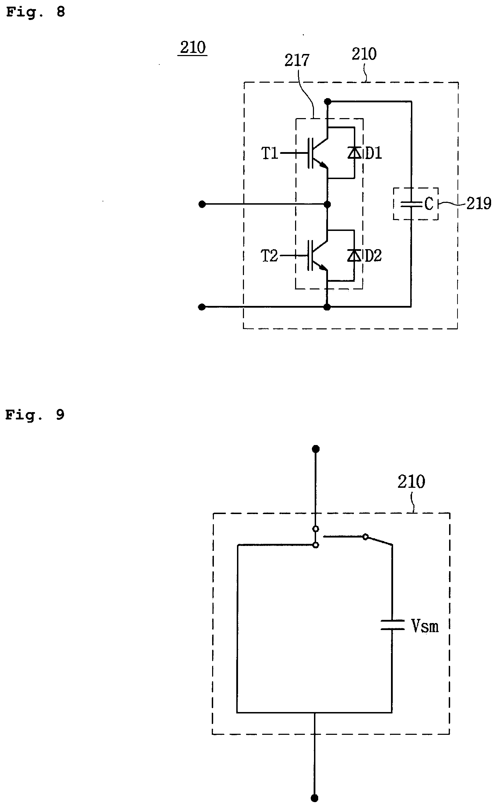

Next, referring to Fig. 8, the configuration of the sub-module 210 will be described.

Fig. 8 is an exemplary view illustrating a configuration of the sub-module 210.

Referring to Fig. 8, the sub-module 210 includes two switches, two diodes, and a capacitor. Such a shape of the sub-module 210 is also referred to as a half-bridge shape or a half bridge inverter.

In addition, the switch included in a switching part 217 may include a power semiconductor.

Here, the power semiconductor refers to a semiconductor element for a power apparatus, and may be optimized for the conversion or control of electric power. Also, the power semiconductor is referred to as a valve unit.

Accordingly, the switch included in the switching part 217 may include a power semiconductor and may include, for example, an insulated gate bipolar transistor (IGBT), a gate turn-off thyristor (GTO), an integrated gate commutated thyristor (IGCT), etc.

The storage part 219 includes the capacitor, and thus may charge or discharge energy. The sub-module 210 may be represented as an equivalent model based on the configuration and the operation of the sub-module 210.

Fig. 9 illustrates an equivalent model of the sub-module 210, and referring to Fig. 9, the sub-module 210 may be illustrated as an energy charge and discharge unit including a switch and a capacitor.

Accordingly, it may be turned out that the sub-module 210 is the same as an energy charge and discharge unit having an output voltage of Vsm.

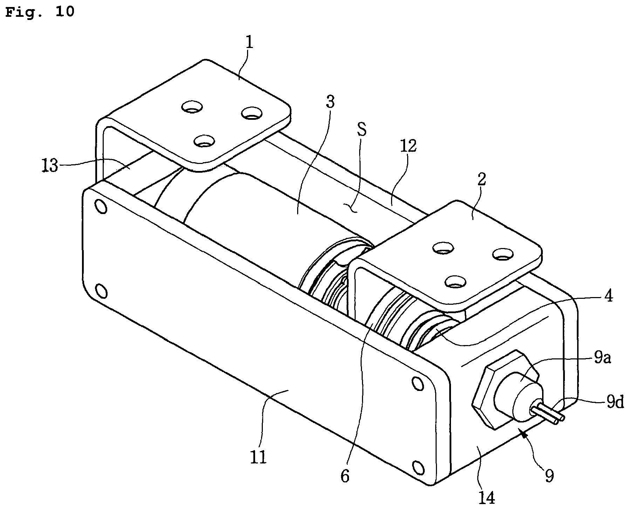

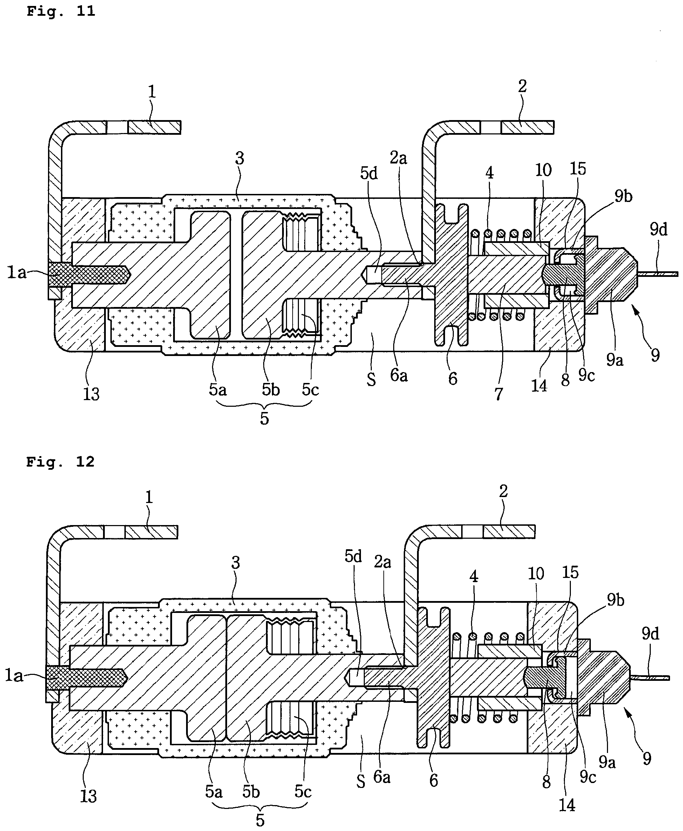

Fig. 10 is a perspective view of a bypass switch for HVDC transmission according to an embodiment, and Fig. 11 is a cross-sectional view of a bypass switch for HVDC transmission according to an embodiment when a fixed contactor and a movable contactor are spaced apart. Fig. 12 is a cross-sectional view of a bypass switch for HVDC transmission according to an embodiment when the fixed contactor and the movable contactor are contacted.

Referring to Figs. 10 and 11, when a failure of a sub-module 210 is detected, a bypass switch for HVDC transmission according to an embodiment prevents the effects of the failure from being propagated to other adjacent sub-modules 210 by shorting the sub-module 210 at which the failure is detected.

That is, a bypass switch for HVDC transmission maintains an opened state while sub-modules 210 normally operate, and when a failure is detected at a sub-module 210, shorts the sub-module 210 at which the failure occurs.

The bypass switch for HVDC transmission according to an embodiment includes a housing 3, a fixed contactor 5a disposed in the housing, and a moving contactor 5b.

The housing 3 may have a space defined therein, and the fixed contactor 5a and the movable contactor 5b may make contact or break contact in the space of the housing 3. The space of the housing 3 may be defined such that the movable contact 5 may be moved.

The housing 3 may also be formed as a vacuum housing . The housing may be a guide which guides the movement of the movable contactor 5b.

In the housing 3 of the bypass switch for HVDC transmission, a bellows 5c disposed between the movable contactor 5b and the housing 3 may be further included. In the housing 3, the bellows 5c may be disposed between the movable contactor 5b and the housing 3 such that a vacuum state may be maintained between the fixed contactor 5a and the movable contactor 5b.

The housing 3 may be formed of an insulative material, and a vacuum interrupter 5 including the fixed contactor 5a, the movable contactor 5b, and the bellows 5c may be disposed therein.

The fixed contactor 5a may be disposed so as to be fixed at the housing 3. The fixed contactor 5a may be disposed at one side in the housing 3. The fixed contactor 5a may be electrically connected to a first portion (not shown) of an HVDC transmission circuit.

The fixed contactor 5a may include an inner plate disposed inside the housing 3, and an outer connection part which protrudes from the inner plate and is exposed to the outside of the housing 3. A coupling member 1a, which electrically connects a first bussbar 1 described below to the fixed contactor 5a, may be connected to the outer connection part of the fixed contactor 5a.

The movable contactor 5b may be disposed so as to be movable at the housing 3. The movable contactor 5b may be disposed at the other side in the housing 3. The movable contactor 5b may be disposed in the housing 3 so as to face the fixed contactor 5a. The movable contactor 5b may be installed to be movable to a position contacting the fixed contactor 5a and movable to a position spaced apart from the fixed contactor 5a. The movable contactor 5b may be electrically connected to a second portion of an HVDC transmission circuit.

The movable contactor 5b may include an inner plate disposed inside the housing 3, and an outer connection part which protrudes from the inner plate and is exposed to the outside of the housing 3. An insulation member 6 described below may be connected to the outer connection part of the movable contactor 5b.

The fixed contactor 5a may be electrically connected to an end of a sub-module circuit, the movable contactor 5b may be electrically connected to the other end of the sub-module circuit, and the sub-module circuit may assume an electrically shorted state when the fixed contactor 5a and the movable contactor 5b contact each other. In this case, when a problem such as a failure of the sub-module circuit occurs, propagation to other circuits or other electrical components may be prevented.

The bypass switch for HVDC transmission may include an insulation member 6 coupled to the movable contactor 5b. The insulation member 6 may be coupled to one side of the movable contactor 5b. The insulation member 6 may be integrally moved with the movable contactor 5b, and when the insulation member 6 is moved, the movable contactor 5b may be moved by the insulation member 6.

The bypass switch for HVDC transmission may include an explosive actuator 9 which is exploded according to an electrical signal. The explosive actuator 9 may be a driving source which generates driving force allowing the movable contactor 5b to be moved toward the fixed contactor 5a. The explosive actuator 9 may put the movable contactor 5b and the fixed contactor 5a in contact with each other by moving the insulation member 6.

The bypass switch for HVDC transmission may include a piston mechanism 7 and 8 which applies force to move the insulation member 6 by being moved by the force of gas generated as the explosive actuator 9 explodes. The piston mechanism 7 and 8 transfers the force of the gas generated when the explosive actuator 9 explodes, and may allow the fixed contactor 5a and the movable contactor 5b to be electrically connected. That is, the piston mechanism 7 and 8 may be at least one power transfer member which transfers the driving force of the explosive actuator 9 to the insulation member 6.

The bypass switch for HVDC transmission may be sequentially disposed in the direction of force transfer in the sequence of the piston mechanism 7 and 8, the insulation member 6, and the movable contactor 5b. The insulation member 6 may be disposed between the movable contactor 5b and the piston mechanism 7 and 8. Also, the piston mechanism 7 and 8 may be disposed between the insulation member 6 and the explosive actuator 9.

The piston mechanism 7 and 8 includes a piston member 8 movably disposed so as to be moved by the gas generated from the explosive actuator 9 and connected to the insulation member 6. In this case, when the explosive actuator 9 explodes, the piston member 8 may directly move the insulation member 6.

The piston mechanism 7 and 8 may include a piston member 8 moved by the gas generated from the explosive actuator 9, and a magnetic member 7 transferring the force applied by the piston member 8 between the piston member 8 and the insulation member 6 to the insulation member 6.

The explosive actuator 9 may include an inflator 9a injecting gas, and an inflator cover 9b coupled to the inflator 9a. The inflator cover 9b may include an inner space 9c defined therein in which the gas injected from the inflator 9a flows to the piston member 8 and the piston member 8 may move.

The inflator 9a may be turned on when a failure is detected at a sub-module 210, and may inject high-pressure gas into the inner space 9c of the inflator cover 9b.

The inflator cover 9b may be an inflator housing in which the piston member 8 may be movably accommodated and the high-pressure gas is expanded. A portion of the piston member 8 may be positioned inside the explosive actuator 9. The piston member 8 may be moved in the inner space 9c. The piston member 8 may be pushed by the gas ejected from the explosive actuator 9 when the explosive actuator 9 explodes, and may push the magnetic member 7 in a direction toward the insulation member 6.

The magnetic member 7 may be disposed between the piston member 8 and the insulation member 6. In this case, when the explosive actuator 9 explodes, the piston member 8 may move the magnetic member 7, and the magnetic member 7 may move the insulation member 6. The magnetic member 7 may be connected to at least one of the piston member 8 and the insulation member 6, and when the piston member 8 is moved toward the insulation member 6, the magnetic member 7 is moved toward the insulation member 6 together with the piston member 8 and may move and slide the insulation member 6.

The bypass switch for HVDC transmission may further include a magnet 10 which holds the magnetic member 7 such that the movable contactor 5b is spaced apart from the fixed contactor 5a before the operation of the explosive actuator 9. The magnet 10 may be installed at a frame 11, 12, 13, and 14 described below, and may apply magnetic force to the magnetic member 7 when installed at the frame 11, 12, 13, and 14.

One side of the movable contactor 5b may be coupled to the insulation member 6, and the insulation member 6 is coupled to the magnetic member 7. The magnet 10 may pull the magnetic member 7 in a direction in which the movable contactor 5b is moved away from the fixed contactor 5a before the explosive actuator 9 is operated. In this case, the insulation member 6 may be pulled in a direction toward the explosive actuator 9 by the magnetic member 7.

The magnetic member 7 may be provided in a shape of a circular cylinder or a rod, and the magnet 10 may be provided in a shape of a hollow cylinder such that the magnetic member 7 is disposed therein. The piston member 8 may be coupled to the magnetic member 7. The magnetic member 7 may be coupled to the insulation member 6. The magnetic member 7 may be inserted into the magnet 10. When the explosive actuator 9 operates, the magnetic member 7 is pushed by the piston member 8 and at least a portion thereof may be exposed to the outside of the magnet 10.

The bypass switch for HVDC transmission may further include a spring 4 which applies force to the insulation member 6. The spring 4 may be disposed between the insulation member 6 and the piston member 8, between the insulation member 6 and the explosive actuator 9, or between the insulation member 6 and the frame 11, 12, 13, and 14.

The spring 4 may be disposed so as to be positioned adjacent to the magnet 10. The spring 4 may be positioned at an outer circumferential surface of the magnet 10. The spring 4 may maintain the state of contacting the insulation member 6. The spring 4 may be disposed between the insulation member 6 and the frame 11, 12, 13, and 14 and apply force to the insulation member 6. The spring 4 may apply force in a direction in which the movable contactor 5b, the insulation member 6, and the magnetic member 7 are moved toward the fixed contactor 5a. The force applied by the spring 4 may be smaller than the force by which the magnet 10 pulls the magnetic member 7. The spring may maintain a compressed state before the explosive actuator 9 operates.

The piston member 8 may push out the magnetic member 7 through the force of explosion gas when the explosive actuator 9 explodes, the insulation member 6 may be pushed by the magnetic member 7, and the movable contactor 5b may contact the fixed contactor 5a. When the magnetic member 7 is moved in a direction toward the fixed contactor 5a in the magnet 10, the spring 4 may maintain an expanded state.

When the magnetic member 7 and the insulation member 6 move as described above, the spring 4 may be released from a compressed state and apply force in a direction from the movable contactor 5b toward the fixed contactor 5a, and allow the movable contactor 5b and the fixed contactor 5a to maintain the state of being in contact. That is, the spring 4 may help the magnetic member 7 more quickly move toward the movable contactor 5b when the explosive actuator 9 operates, and after the explosive actuator 9 operates, the spring 4 may help the movable contactor 5b and the fixed contactor 5a not to break contact.

The bypass switch for HVDC transmission may further include the frame 11, 12, 13, and 14. The frame 11, 12, 13, and 14 may include a space S defined therein. The housing 3 may be disposed in the space S. The housing 3 may be accommodated in the space S. The movable contactor 5b and the insulation member 6 may be movably positioned in the space S. At least a portion of the spring 4 may be positioned in the space S. At least a portion of the magnet 10 may be positioned in the space S. The frame 11, 12, 13, and 14 may protect the housing 3, the movable contact 5b, the insulation member 6, the spring 4, and the magnet 10. The frame 11, 12, 13, and 14 may define an appearance of the bypass switch for HVDC transmission.

The frame 11, 12, 13, and 14 may include a first frame 11 and a second frame 12. The first and second frames 11 and 12 may be disposed parallel to each other along a longitudinal direction of the bypass switch for HVDC transmission.

The frame 11, 12, 13, and 14 may further include third and fourth frames 13 and 14. The third and fourth frames 13 and 14 may be disposed parallel to each other at both ends of the first and second frames 11 and 12. The third and fourth frames 13 and 14 may be coupled to the first and second frames 11 and 12 and supported by the first and second frames 11 and 12. The frame 11, 12, 13, and 14 may define a space S with the first, second, third, and fourth frames.

The fixed contactor 5a may be disposed in the frame 11, 12, 13, and 14. Also, the explosive actuator 9 may be disposed in the frame 11, 12, 13, and 14. The frame 11, 12, 13, and 14 may include a through hole 15 into which a portion of the explosive actuator 9 is inserted.

The inflator 9a of the explosive actuator 9 may be disposed at the outside of the frame 11, 12, 13, and 14, and a wire 9d supplying power to the inflator 9a may be connected to the inflator 9d at the outside of the frame 11, 12, 13, and 14.

The inflator cover 9b of the explosive actuator 9 may be disposed to be positioned at the through hole 15 formed on the frame 11, 12, 13, and 14, and may be protected by the frame 11, 12, 13, and 14.

The fixed contactor 5a and the explosive actuator 9 may be disposed at the frame 11, 12, 13, and 14 to face each other. The fixed contactor 5a and the explosive actuator 9 may be separately disposed at the first and second frames 11 and 12, or may be separately disposed at the third and fourth frames 13 and 14. Hereinafter, the fixed contactor 5a and the explosive actuator 9 will be described as being separately disposed at the third and fourth frames 13 and 14.

Any one of the fixed contactor 5a and the explosive actuator 9 may be disposed at the third frame 13 and the other may be disposed at the fourth frame 14 facing the third frame 13.

When the fixed contactor 5a is disposed at the third frame 13, the explosive actuator 9 may be disposed at the fourth frame 14, and conversely, when the fixed contactor 5a is disposed at the fourth frame 14, the explosive actuator 9 may be disposed at the third frame 13.

The housing 3 may be disposed together with the fixed contactor 5a at the frame at which the fixed contactor 5a is disposed, from among the first, second, third, and fourth frames.

The magnet 10 may be disposed together with the explosive actuator 9 at the frame at which the explosive actuator 9 is disposed, from among the first, second, third, and fourth frames. The spring 4 may be disposed between the frame at which the explosive actuator 9 is disposed and the insulation member 6.

The fixed contactor 5a may be disposed at and supported by the third frame 13, and the housing 3 may be disposed at and supported by the third frame 13. Meanwhile, the explosive actuator 9 may be disposed at and supported by the fourth frame 14, the magnet 10 may be disposed at and supported by the fourth frame 14, and the spring 4 may be disposed between the fourth frame 14 and the insulation member 6.

The bypass switch for HVDC transmission may include a first bussbar 1 connected to the fixed contactor 5a, and a second bussbar 2 connected to the movable contactor 5b. The first bussbar 1 may be electrically connected to the fixed contactor 5a. Also, the second bussbar may be electrically connected to the movable contactor 5b. When the fixed contactor 5a and the movable contactor 5b are in contact with each other, circuits electrically connected to the first and second bussbars 1 and 2 may be shorted.

The fixed contactor 5a may be electrically connected to the first portion of the HVDC transmission circuit through the first bussbar 1, and the movable contactor 5b may be electrically connected to the first portion of the HVDC transmission circuit through the second bussbar 2.

The first bussbar 1 may be electrically connected to the fixed contactor 5a through a coupling member 1a, and of course, may be directly and electrically connected to the fixed contactor 5a.

The second bussbar 2 may be disposed between the movable contactor 5b and the insulation member 6 and may be electrically connected to the movable contactor 5b. The insulation member 6 allows the second bussbar 2 and the magnetic member 7 formed of a metallic material to be electrically insulated. The insulation member 6 may include a protrusion 6a formed thereon, and the protrusion 6a may penetrate a through hole 2a formed in the second bussbar 2 and may be inserted into an insertion groove 5d formed in the movable contactor 5b to be coupled. The spring 4 may be disposed between the second bussbar 2 and the fourth frame 14. The spring 4 may apply force such that the insulation member 6 may move in the direction in which the fixed contactor 5a is disposed.

The bypass switch for HVDC transmission, under normal circuit conditions, maintains a state in which the fixed contactor 5a and the movable contactor 5b are spaced apart from and electrically separated from each other as illustrated in Fig. 11. That is, the first and second bussbars 1 and 2 are electrically separated from each other.

On the contrary, when a problem occurs in the circuit, an electrical signal is applied to the explosive actuator 9 and the explosive actuator 9 explodes. As the explosive actuator 9 explodes, high-pressure gas is ejected and pushes the piston member 8. The piston member 8 pushes the magnetic member 7, the insulation member 6, and the movable contactor 5b such that the movable contactor 5b contacts the fixed contactor 5a. Here, the compressed state of the spring 4 is released and the spring 4 pushes the insulation member 6 and the movable contactor 5b toward the installed fixed contactor 5b to maintain a state in which the fixed and movable contactors 5a and 5b are in contact with each other. Accordingly, the fixed and movable contactors 5a and 5b are electrically connected to each other. That is, the first and second bussbars 1 and 2 are electrically connected to each other.

As described above, since in the bypass switch for HVDC transmission according to an embodiment, the piston member 8 pushes the movable contactor 5b due to the operation of the explosive actuator 9, there is a merit in that a high speed operation is possible.

Also, in the bypass switch for HVDC transmission according to an embodiment, the magnet 10 functions to maintain the magnetic member 7 in an initial state, and the spring 4 functions to maintain the state after the movable contactor 5b contacts the fixed contactor 5a. Accordingly, since a coil for moving a separate axis is not required, there is a merit in that the bypass switch may be manufactured to have a small volume.

According to embodiments, there is a merit in that the movable contactor may be more quickly operated to quickly block the circuit than in the case of using a coil armature to operate the movable contactor.

Also, there is a merit in that the magnetic member, the magnet, and the spring may be compactly installed, and the overall size may be minimized.

Also, there is a merit in that the movable contactor and the fixed contactor may be maintained in stable contact with each other.

Also, there is a merit in that the movable contactor is prevented from suffering a malfunction caused by the magnet and the magnetic member, and has high reliability.

Also, there is a merit in that services such as the replacement or repair of the explosive actuator are easy.

Although the present invention has been described through the embodiments and the accompanying drawings, the scope of the present invention is not limited thereto, and those skilled in the art will appreciate that simple modifications are possible.

## Claims

1. A bypass switch for high voltage direct current "HVDC" transmission, the bypass switch comprising:
a housing(3);
a fixed contactor(5a) disposed in the housing(3) and electrically connected to a first portion of an HVDC transmission circuit;
a movable contactor(5b) movably disposed in the housing(3) at a position spaced apart from the fixed contactor(5a) and electrically connected to a second portion of the HVDC transmission circuit;
an insulation member(6) coupled to the movable contactor(5b);
an explosive actuator(9) exploded according to an electrical signal; and
a piston mechanism(7,8) which is moved by the force of gas generated due to the explosion of the explosive actuator(9), applies force to move the insulation member(6), and allows the fixed contactor(5a) and movable contactor(5b) to be electrically connected to each other,
**characterized in that**
the piston mechanism (7,8) comprises
a piston member(8) moved by the gas;
a magnetic member(7), placed between the insulation member(6) and the piston member(8), transferring the force which is applied by the piston member(8) to the insulation member(6); and a magnet(10) holding the magnetic member(7) such that the movable contactor(5b) is spaced apart from the fixed contactor(5a) before the explosive actuator(9) operates.

2. The bypass switch according to claim 1, wherein the explosive actuator(9) comprises
an inflator(9a) injecting gas, and
an inflator cover(9b) coupled to the inflator,
wherein the inflator cover(9b) includes an inner space(9c) in which the gas injected from the inflator(9a) flows to the piston member(8) and the piston member(8) is movably disposed.

3. The bypass switch according to claim 1, wherein the magnetic member(7) is provided in a cylindrical shape, and the magnet(10) is provided in a shape of a hollow cylinder such that the magnetic member(7) is disposed therein.

4. The bypass switch according to claim 1, further comprising a frame(11,12,13,14) defining a space accommodating the housing(3), wherein the magnet(10) is disposed in the frame(11,12,13,14).

5. The bypass switch according to claim 1, further comprising a spring(4) disposed around the magnet(10) and applying force to the insulation member(6).

6. The bypass switch according to claim 5, comprising:
a first frame(11);
a second frame(12);
a third frame(13) coupled to the fixed contactor(5a) and supported by the first and second frames(11,12); and
a fourth frame(14) coupled to the explosive actuator(9) and supported by the first and second frames(11,12).

7. The bypass switch according to claim 6, wherein the magnet(10) is coupled to and supported by the fourth frame(14), and the spring(4) is disposed between the insulation member(6) and the fourth frame(14).

8. The bypass switch according to claim 1, further comprising:
a first bussbar(1) electrically connected to the fixed contactor(5a); and
a second bussbar(2) electrically connected to the movable contactor(5b).

9. The bypass switch according to claim 8, wherein the second bussbar(2) is disposed between the movable contactor(5b) and the insulation member(6) and contacts the movable contactor(5b) and the insulation member(6).

10. The bypass switch according to claim 9, wherein the insulation member(6) includes a protrusion(6a) which penetrates a through hole(2a) provided in the second bussbar(2) and is coupled to an insertion groove(5d) provided in the movable contactor(5b).

11. The bypass switch according to claim 1, wherein the housing(3) is a vacuum housing and further comprises a bellows(5c) disposed between the movable contactor(5b) and the housing(3) in the housing(3).

12. The bypass switch according to claim 11, wherein the vacuum housing(3) is formed of an insulation material.

13. The bypass switch according to claim 1, further comprising a frame(11,12,13,14) defining a space accommodating the housing(3), wherein the explosive actuator(9) is disposed in the frame.

## Patentansprüche

1. Umgehungsschalter für Hochspannungsgleichstrom-"HVDC"-Übertragung, wobei der Umgehungsschalter umfasst:
ein Gehäuse (3);
einen feststehenden Kontaktgeber (5a), der in dem Gehäuse (3) angeordnet ist und elektrisch mit einem ersten Abschnitt einer HVDC-Übertragungsschaltung verbunden ist;
einen bewegbaren Kontaktgeber (5b), der bewegbar in dem Gehäuse (3) an einer Position angeordnet ist, die von dem feststehenden Kontaktgeber (5a) beabstandet ist und der elektrisch mit einem zweiten Abschnitt der HVDC-Übertragungsschaltung verbunden ist;
ein Isolationselement (6), das an den bewegbaren Kontaktgeber (5b) gekoppelt ist;
einen explosiven Aktuator (9), der gemäß einem elektrischen Signal explodiert; und
einen Kolbenmechanismus (7, 8), welcher durch die Kraft von Gas, welches aufgrund der Explosion des explosiven Aktuators (9) erzeugt wird, bewegt wird, der Kraft anwendet, um das Isolationselement (6) zu bewegen, und es dem feststehenden Kontaktgeber (5a) und dem bewegbaren Kontaktgeber (5b) erlaubt, elektrisch miteinander verbunden zu werden,
**dadurch gekennzeichnet, dass**
der Kolbenmechanismus (7, 8) umfasst
ein Kolbenelement (8), welches durch das Gas bewegt wird;
ein magnetisches Element (7), welches zwischen dem Isolationselement (6) und dem Kolbenelement (8) platziert ist, welches die Kraft, die durch das Kolbenelement (8) auf das Isolationselement (6) angewandt wird, überträgt; und einen Magneten (10), welcher das magnetische Element (7) hält, so dass der bewegbare Kontaktgeber (5b) von dem feststehenden Kontaktgeber (5a), bevor der explosive Aktuator (9) betrieben wird, beabstandet ist.

2. Umgehungsschalter nach Anspruch 1, wobei der explosive Aktuator (9) umfasst einen Gasgenerator (9a), der Gas injiziert, und
eine Abdeckung (9b) für den Gasgenerator, die mit dem Gasgenerator gekoppelt ist,
wobei die Abdeckung (9b) des Gasgenerators einen inneren Raum (9c) beinhaltet, in welchen das Gas, welches von dem Gasgenerator (9a) injiziert wird, zu dem Kolbenelement (8) fließt und wobei das Kolbenelement (8) bewegbar angeordnet ist.

3. Umgehungsschalter nach Anspruch 1, wobei das magnetische Element (7) in einer zylindrischen Form bereitgestellt ist, und wobei der Magnet (10) in einer Form eines hohlen Zylinders bereitgestellt ist, so dass das magnetische Element (7) darin angeordnet ist.

4. Umgehungsschalter nach Anspruch 1, wobei der Umgehungsschalter ferner einen Rahmen (1, 12, 13, 14) umfasst, der einen Raum definiert, welcher das Gehäuse (3) beherbergt, wobei der Magnet (10) in dem Rahmen (11,12,13,14) angeordnet ist.

5. Umgehungsschalter nach Anspruch 1, wobei der Umgehungsschalter ferner eine Feder (4) umfasst, die um den Magneten (10) angeordnet ist und eine Kraft auf das Isolationselement (6) anwendet.

6. Umgehungsschalter nach Anspruch 5, umfassend:
einen ersten Rahmen (11);
einen zweiten Rahmen (12);
einen dritten Rahmen (13), der mit dem feststehenden Kontaktgeber (5a) gekoppelt ist und durch den ersten und den zweiten Rahmen (11, 12) gestützt wird; und
einen vierten Rahmen (14), der an den explosiven Aktuator (9) gekoppelt ist und durch den ersten und den zweiten Rahmen (11, 12) gestützt wird.

7. Umgehungsschalter nach Anspruch 6, wobei der Magnet (10) an den vierten Rahmen (14) gekoppelt ist und durch diesen gestützt wird, und wobei die Feder (4) zwischen dem Isolationselement (6) und dem vierten Rahmen (14) angeordnet ist.

8. Umgehungsschalter nach Anspruch 1, ferner umfassend:
eine erste Stromschiene (1), die elektrisch mit dem feststehenden Kontaktgeber (5a) verbunden ist; und
eine zweite Stromschiene (2), die elektrisch mit dem bewegbaren Kontaktgeber (5b) verbunden ist.

9. Umgehungsschalter nach Anspruch 8, wobei die zweite Stromschiene (2) zwischen dem bewegbaren Kontaktgeber (5b) und dem Isolationselement (6) angeordnet ist und den bewegbaren Kontaktgeber (5b) und das Isolationselement (6) kontaktiert.

10. Umgehungsschalter nach Anspruch 9, wobei das Isolationselement (6) einen Vorsprung (6a) beinhaltet, welcher in ein Durchgangsloch (2a) eindringt, welches in der zweiten Stromschiene (2) bereitgestellt ist und an eine Einfügenut (5d) gekoppelt ist, welche in dem bewegbaren Kontaktgeber (5b) bereitgestellt ist.

11. Umgehungsschalter nach Anspruch 1, wobei das Gehäuse (3) ein Vakuumgehäuse ist und ferner einen Balg (5c) umfasst, welcher zwischen dem bewegbaren Kontaktgeber (5b) und dem Gehäuse (3) in dem Gehäuse (3) angeordnet ist.

12. Umgehungsschalter nach Anspruch 11, wobei das Vakuumgehäuse (3) aus einem Isolationsmaterial gebildet ist.

13. Umgehungsschalter nach Anspruch 1, ferner einen Rahmen (11, 12, 13, 14) umfassend, der einen Raum definiert, welcher das Gehäuse (3) beherbergt, wobei der explosive Aktuator (9) in dem Rahmen angeordnet ist.

## Revendications

1. Un commutateur de dérivation pour une transmission en courant constant haute tension "HVDC", le commutateur de dérivation comprenant :
un boitier (3) ;
un contacteur fixe (5a) disposé dans le boitier (3) et relié électriquement à une première partie d'un circuit de transmission HVDC ;
un contacteur mobile (5b) disposé mobile dans le boitier (3) en une position située à distance du contacteur fixe (5a) et électriquement relié à une seconde partie du circuit de transmission HVDC ;
un organe d'isolement (6) couplé au contacteur mobile (5b) ;
un actionneur pyrotechnique (9) amorcé en fonction d'un signal électrique ; et
un mécanisme à piston (7, 8) qui est déplacé par la force du gaz généré du fait de l'explosion de l'actionneur pyrotechnique (9), applique une force qui déplace l'organe d'isolement (6) et qui permet au contacteur fixe (5a) et au contacteur mobile (5b) de se relier électriquement l'un à l'autre,
**caractérisé en ce que**
le mécanisme à piston (7, 8) comprend
un organe de piston (8) déplacé par le gaz ;
un organe magnétique (7), placé entre l'organe d'isolement (6) et l'organe de piston (8), transférant la force qui est appliquée par l'organe de piston (8) à l'organe d'isolement (6) ; et
un aimant (10) retenant l'organe magnétique (7) de telle sorte que le contacteur mobile (5b) soit à distance du contacteur fixe (5a) avant le fonctionnement de l'actionneur pyrotechnique (9).

2. Le commutateur de dérivation selon la revendication 1, dans lequel l'actionneur pyrotechnique (9) comprend
un gonfleur (9a) d'injection de gaz, et
un couvercle de gonfleur (9b) couplé au gonfleur,
le couvercle de gonfleur (9b) incluant un espace interne (9c) dans lequel le gaz injecté depuis le gonfleur (9a) s'écoule vers l'organe de piston (8) et l'organe de piston (8) est disposé mobile.

3. Le commutateur de dérivation selon la revendication 1, dans lequel l'organe magnétique (7) est produit avec une forme cylindrique, et l'aimant (10) est produit avec une forme d'un cylindre creux de manière que l'organe magnétique (7) soit disposé à l'intérieur.

4. Le commutateur de dérivation selon la revendication 1, comprenant en outre une armature (11, 12, 13, 14) définissant un espace logeant le boitier (3), l'aimant (10) étant disposé dans l'armature (11, 12, 13, 14).

5. Le commutateur de dérivation selon la revendication 1, comprenant en outre un ressort (4) disposé autour de l'aimant (10) et appliquant une force sur l'organe d'isolement (6).

6. Le commutateur de dérivation selon la revendication 5, comprenant :
une première armature (11) ;
une seconde armature (12) ;
une troisième armature (13) couplée au contacteur fixe (5a) et supportée par la première et la seconde armature (11, 12) ; et
une quatrième armature (14) couplée à l'actionneur pyrotechnique (9) et supportée par la première et la seconde armature (11, 12).

7. Le commutateur de dérivation selon la revendication 6, dans lequel l'aimant (10) est couplé à la quatrième armature (14) et supporté par celle-ci, et le ressort (4) est disposé entre l'organe d'isolement (6) et la quatrième armature (14).

8. Le commutateur de dérivation selon la revendication 1, comprenant en outre :
une première barre bus (1) électriquement reliée au contacteur fixe (5a) ; et
une seconde barre bus (2) électriquement reliée au contacteur mobile (5b).

9. Le commutateur de dérivation selon la revendication 8, dans lequel la seconde barre bus est disposée entre le contacteur mobile (5b) et l'organe d'isolement (6) et vient en contact avec le contacteur mobile (5b) et l'organe d'isolement (6).

10. Le commutateur de dérivation selon la revendication 9, dans lequel l'organe d'isolement (6) comprend une saillie (6a) qui pénètre dans un trou traversant (2a) ménagé dans la seconde barre bus (2) et est couplée à une gorge d'insertion (5d) ménagée dans le contacteur mobile (5b).

11. Le commutateur de dérivation selon la revendication 1, dans lequel le boitier (3) est un boitier sous vide et comprend en outre dans le boitier (3) un soufflet (5c) disposé entre le contacteur mobile (5b) et le boitier (3).

12. Le commutateur de dérivation selon la revendication 11, dans lequel le boitier sous vide (3) est formé d'un matériau d'isolement.

13. Le commutateur de dérivation selon la revendication 1, comprenant en outre une armature (11, 12, 13, 14) définissant un espace logeant le boitier (3), l'actionneur pyrotechnique (9) étant disposé dans l'armature.
